# EUROPEAN PATENT APPLICATION

(11) **EP 2 106 035 A1**
(43) Date of publication of application: **30.09.2009**
(21) Application number: 08251164.3
(22) Date of filing: 28.03.2008
(51) Int. Cl.: H04B 7/02, H04B 7/06, H04B 7/08

(54) **Communication using multiple antennas**

(71) Applicant: British Telecommunications Public Limited Company, London EC1A 7AJ (GB)
(72) Inventor: The designation of the inventor has not yet been filed
(74) Representative: Lau, Chi-Fai

(57) **Abstract**

A system for performing diversity reception, comprising: two receiver units, each receiver unit comprising an antenna and receive processing circuitry for processing signals received at the antenna and outputting a series of digital samples indicative of the received signals; and a diversity combiner linked to the receiver units for receiving the digital samples, the diversity combiner being linked to at least one of the receiver units over a data network, and configured to perform diversity combining of the signals represented by the samples.

## Description

This invention relates to communication devices collectively having multiple antennas that are coupled to a common signal receiver component.

Multiple element antennas have been the subject of intense research over the past few years as a way of increasing the coverage or capacity of a wireless link. (See "Introduction to Space-Time Wireless Communications" by Paulraj, Nabar and Gore). The generic case is where both the transmitter and receiver(s) on a link have multiple antennas all operating on the same radio channel and advantage is taken of the spatial and time differences between them. Background

It is known that using multiple antennas to receive or transmit signals can help protect against interference or fading. Various protocols can be used so as to benefit from multiple antennas. These include: (a) techniques such as beamforming in which signals over multiple paths are intended to carry the same data but in constructive phase relationships; (b) techniques such as spatial multiplexing in which data is passed redundantly over independent channels between multiple antennas; and (c) techniques that involve switching between or performing weighted combining of signals from multiple antennas. In the case where the antennas are used in diversity or multiplexing mode, the maximum gain is achieved when the signal is not correlated between the antennas and therefore the antennas need to be as far apart as possible to achieve this. In contrast, if the antennas are used as an array in beamforming mode, maximum gain is achieved when the signal is perfectly correlated between the antennas and so the elements should be close together (ideally half wavelength apart).

Whatever multiple antenna technique is in use certain functions need to be performed at the transmitter and/or the receiver. If the technique uses multiple antenna transmission then the transmitter must form modulated signals for transmission and must establish how the signals are to be split between the antennas. The order in which those steps are performed will depend on the technique that is in use. If the technique uses multiple antennas for reception then the transmitter must demodulate the received signals and must combine the signals from the antennas. Again, the order in which those steps are performed will depend on the technique that is in use.

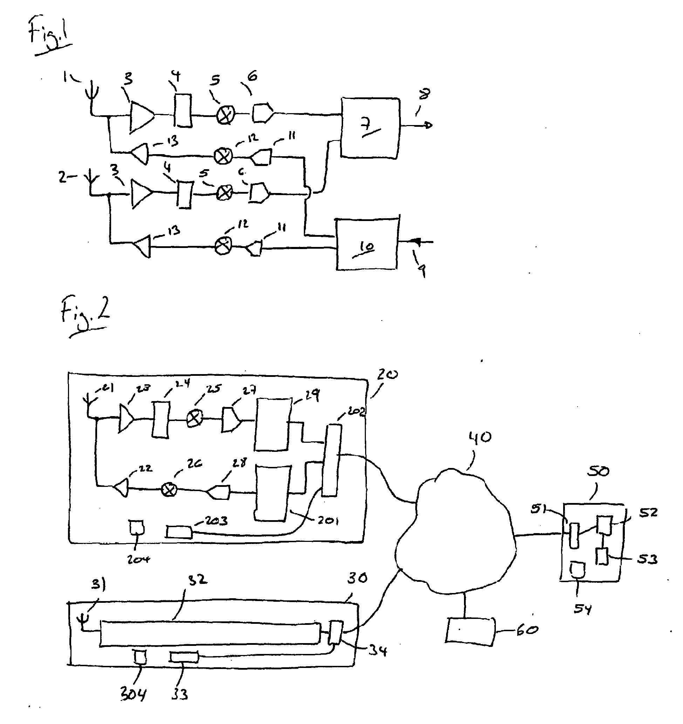

Figure 1 is a schematic diagram of one example of a transceiver using multiple antennas. The transceiver comprises a pair of antennas 1, 2. Each antenna has an associated receive chain comprising an amplifier 3, a filter 4, a mixer 5 and an analogue to digital converter 6. The outputs of the A-to-D converters 6 are passed to a baseband receive processor 7 which combines and demodulates the signals from the antennas in a manner appropriate to the communications protocol that is in use and forms a data output at 8. Each antenna has a transmit chain which receives data at 9 and comprises a baseband transmit processor 10 which forms modulated signals in a manner appropriate to the communications protocol that is in use, a D-to-A converter 11, a mixer 12 and an amplifier 13.

It would be useful to be able to benefit from the improved signal quality and data rate that can be provided by diversity transmission and/or reception even in devices that have not been configured as dedicated diversity transceivers.

According to one aspect of the present invention there is provided a system for performing diversity reception, comprising: two receiver units, each receiver unit comprising an antenna and receive processing circuitry for processing signals received at the antenna and outputting a series of digital samples indicative of the received signals; and a diversity combiner linked to the receiver units for receiving the digital samples, the diversity combiner being linked to at least one of the receiver units over a data network, and configured to perform diversity combining of the signals represented by the samples. The system could comprise three or more such receiver units.

The diversity combining may comprise performing channel estimation in respect of two or more physical channels between the antennas and one or more transmitters.

The diversity combining may comprise performing spatial demultiplexing on the signals represented by the samples.

The diversity combining may comprise processing the samples in accordance with the signals represented by the samples being un-correlated signals.

The receiver units may each comprise a downconverter for downconverting received signals to signals at a baseband frequency. The samples may be samples of the signals at a baseband frequency.

The receiver units may each comprise an FFT unit for performing FFT on the received signals. The samples may be derived from the outputs of the FFT unit.

At least some of the samples may be transmitted to the diversity combiner in conjunction with data indicating the time at which the corresponding signal was received at the respective receiver.

According to a second aspect of the present invention there is provided a system for performing diversity transmission, comprising: two transmitter units, each transmitter unit comprising an antenna and transmit processing circuitry; a diversity splitter for receiving traffic data, the diversity splitter being communicatively linked to each transmitter unit, the link between the diversity splitter and at least one of the receiver units being over a data network, and being configured to perform diversity splitting of the traffic data to form two series of digital signals, each series of digital signals representing a signal transmissible over one of multiple antennas such that transmission of the signals represented by both the series of digital signals can collectively represent the traffic data and to transmit one series of digital signals over the link to each transmitter unit; the transmit processing circuitry of each transmitter unit being configured to process digital signals received at that transmitter unit to cause signals dependent on those digital signals to be transmitted by means of the respective antenna. The system could comprise three or more such transmitter units.

The diversity splitting may be performed in dependence on channel estimates in respect of two or more physical channels between the antennas and one or more receivers.

The diversity splitting may comprise performing spatial multiplexing on the traffic data.

The diversity splitting may comprises forming the series of digital signals to represent un-correlated transmissible signals.

The transmitter units may each comprise an upconverter for upconverting signals represented by the digital signals for transmission to a radio frequency.

The diversity splitter may comprise an inverse FFT unit for performing inverse FFT on data to be transmitted. The digital signals may be derived from the outputs of the inverse FFT unit.

The data network may be a packet data network.

At least some of the samples may be transmitted to the transmitters in conjunction with data indicating the time at which the corresponding signals are to be transmitted.

The present invention will now be described by way of example with reference to the accompanying drawings. In the drawings:
Figure 1 is a schematic diagram of a transceiver having multiple antennas; and
Figure 2 is a schematic diagram of a diversity system including multiple interlinked transceivers.

In the system of figure 2 there are multiple devices 20, 30 that include radio transceivers. The devices 20, 30 are connected over a data network 40 to a processing unit 50. When receiving, the transceivers of the devices 20, 30 transmit to the processing unit 50 low-level data defining the signals they have each received. The low-level data is passed from the devices 20, 30 to the processing unit 50 over the network 40. The processing unit performs diversity processing on the signals received by the transceivers and outputs the resulting traffic data either to another unit connected to the network (e.g. unit 60) or to one or both of the devices 20, 30. In receive the diversity processing involves diversity combining or spatial demultiplexing. In transmit the diversity processing involves diversity splitting or spatial multiplexing. In this way, the antennas of the devices 20, 30 can operate co-operatively in diversity and spatial multiplexing (e.g. MIMO) modes despite them being parts of separate devices. When operating in accordance with this system the devices transmit or receive un-correlated signals but effectively cooperate at the physical layer to improve signal quality by diversity mechanisms.

The split of functions between the devices 20, 30 and the device 50 will depend on the protocol that is in use and on the capabilities of network 40, but in a convenient implementation the spatially distributed devices 20, 30 (which include or are co-located with their respective antennas) perform downconversion and sampling of the received signals, and the centralised device 50 (which could be co-located with one of the devices 20, 30) performs channel estimation and demodulation/decoding.

The transceiver of device 20 is shown in schematic detail. It comprises an antenna 21 connected to a transmit chain and a receive chain. The transmit chain comprises a baseband transmit processor 201, a D-to-A converter 28, a mixer 26 and an amplifier 22. The receive chain comprises an amplifier 23, a filter 24, a mixer 25, an A-to-D converter 26 and a baseband receive processor 29. Other than the baseband processors 29 and 201, these components operate in the conventional way. Other designs of transmit and receive chains could be used: for instance with multiple mixing or filtering stages. The baseband processors of the transceiver are coupled to a network interface 202 which is in turn coupled to the network 40. A central processing unit (CPU) 203 for device 20 is also coupled to the network interface.

Device 30 could have the same structure as device 20, but for simplicity the components of the transmit and receive chains of device 30 are not illustrated in figure 2. Device 30 comprises an antenna 31, the other transceiver components illustrated at 32, a central processing unit (CPU) 33 and a network interface 34.

Device 50 comprises a network interface 51 by which it is connected to network 40, a CPU 52 and a memory 53 which stores program code that can be executed by the CPU 52 to allow the device 50 to perform its functions. As indicated above, those functions include performing one or both of:
(a) for transmission: receiving traffic data, processing that traffic data by steps that include diversity splitting the data to define separate signal streams for independent transmission by antennas 21 and 31, and transmitting data defining the signals to be transmitted from devices 20 and 30 over the network 40 to those devices; and
(b) for reception: receiving over the network 40 low-level data defining signals received by the transceivers of devices 20 and 30, processing that data by steps including diversity combining so as to derive traffic data from the received signals, and consuming that traffic data or outputting it so it can be consumed by another device.

The devices 20, 30 can usefully pool information that can be used to make channel estimates. Examples of the manner in which those estimates are formed or by which other forms of diversity splitting/combining can be performed in device 50 are discussed in "Introduction to Space-Time Wireless Communications" by Paulraj, Nabar and Gore, "Maximal Ratio Transmission" by Titus KY Lo (1999) and "Capacity Enhancement via Multi-mode adaption in spatially correlated MIMO channels" by Forenza et al.

The manner in which the receive baseband processors (e.g. processor 29) output the low-level data defining the received signals will depend on the nature of the signals being received, and the bandwidth available between the devices 20, 30 and the processing device 50. One option is for the receive baseband processors to send all received digitised samples as output by the A-to-D converter 27 and its equivalent in device 30. Another option is to send a compressed version of those samples. The method of compression should be selected with knowledge of the protocol that is in use, so as to ensure that sufficient information is still present in the compressed sample data to allow the processing device 50 to perform diversity combining. For example, if the received signals are OFDM (orthogonal frequency division multiplexed) or similar signals then the receive baseband processors could usefully perform FFT (fast Fourier transform) of the received samples and output the contents of the FFT bins (FFT samples) to the device 50.

For transmission, the low-level signals sent from the device 50 to the transceivers could similarly be data that can be input to the D-to-A converter 28 and its equivalent in device 30, or a compressed version of those samples. In an OFDM system, the data that is sent could be the results of an inverse FFT operation on the traffic data or on a processed version of the traffic data. If the diversity transmission involves relative phase adjustment of the signals transmitted by devices 20 and 30 then that phase adjustment could be performed at the device 50 and incorporated in the datastream sent to the devices 20, 30. Alternatively, in addition to transmitting the low-level datastream to the devices 20, 30, the device 50 could transmit information on phase delay of the signals to be transmitted, for example by means of a tapped delay line in the digital or analogue signal parts of the transmit signal paths in the devices 20 and 30.

Signals passing over the network 40 might be subject to variable delay. To cope with that, it is advantageous to time-stamp the low-level signals passing over the network. In receive, this allows the combining device 50 to process data from devices 20 and 30 coherently and so get the best benefit from diversity reception. In transmit, it allows devices 20 and 30 to coherently transmit data as intended by the combining device 50. To achieve this, the signals could be sent in packets that include data defining the time at which the signals were received according to local clocks 204, 304 of devices 20, 30, or that include data defining the time (e.g. with reference to a clock 54 of the device 50) at which they are to be transmitted. The clocks 204, 304, 54 could be mutually synchronised over the network by another mechanism: for example by reference to an external reference clock.

In performing diversity reception or transmission it is advantageous for the processor 50 to have knowledge of the relative positions of the antennas 21, 31. This may be pre-programmed into the processor 50 if the locations are known, or could be learned by the processor or by devices 20, 30 through analysis of signals received by or passing between them and/or another transceiver. For example, the devices 20, 30 could synchronise to a training sequence sent by a third transceiver device.

The functions of device 50 could be performed by one of the CPUs 203, 33, in which case only one of the devices need send data defining its received signals over the network.

Data from more than two receivers or destined for more than two transmitters could be combined or split in an analogous way to that described above.

In one illustrative application of the techniques described above, the devices 20, 30 could be laptop computers receiving WiMAX signals. The laptop computers could each have onboard receivers, and could co-operate by sharing received samples over a network so as to improve the quality with which each computer can decode the WiMax signals. The computers could share the samples over a wireless network (e.g. wireless LAN or Bluetooth) or over a wired network (e.g. Ethernet). Each laptop computer could receive samples from some or all of the others and could perform local diversity combining to obtain the traffic data intended for it. Alternatively, another device connected to the network could perform the diversity combining and could transmit traffic data to each of the laptop computers. The laptop computers could be configured to automatically negotiate entry to such a co-operative system upon coming into range of other computers with similar capabilities. Similar cooperation could work for transmission. The system could work with other network protocols than WiMax, and for devices other than laptop computers, for example mobile phones and wireless-equipped home or office equipment.

A system of this type could be advantageous in environments such as coffee bars or trains where a community of users can be connected by ad-hoc or installed network. Every user that joins can provide an additional antenna, increasing communal signal quality. Since the system is operating in a diversity or multiplexing mode, the antennas are advantageously as far apart as possible. In an environment such as a train it would be highly impractical for a single user to deploy antennas at opposite ends of the train, but a community of users could easily provide such spaced-apart antennas in the manner described above.

Examples of radio protocols with which the techniques described above could be used include WiFi, WiMAX and 3G LTE systems.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A system for performing diversity reception, comprising:
two receiver units, each receiver unit comprising an antenna and receive processing circuitry for processing signals received at the antenna and outputting a series of digital samples indicative of the received signals; and
a diversity combiner linked to the receiver units for receiving the digital samples, the diversity combiner being linked to at least one of the receiver units over a data network, and configured to perform diversity combining of the signals represented by the samples.

2. A system as claimed in claim 1, wherein the diversity combining comprises performing channel estimation in respect of two or more physical channels between the antennas and one or more transmitters.

3. A system as claimed in claim 1 or 2, wherein the diversity combining comprises performing spatial demultiplexing on the signals represented by the samples.

4. A system as claimed in any preceding claim, wherein the diversity combining comprises processing the samples in accordance with the signals represented by the samples being un-correlated signals.

5. A system as claimed in any preceding claim, wherein the receiver units each comprise a downconverter for downconverting received signals to signals at a baseband frequency, and the samples are samples of the signals at a baseband frequency.

6. A system as claimed in any of claims 1 to 4, wherein the receiver units each comprise an FFT unit for performing FFT on the received signals and the samples are derived from the outputs of the FFT unit.

7. A system as claimed in any preceding claim, wherein the data network is a packet data network.

8. A system as claimed in any preceding claim, wherein at least some of the samples are transmitted to the diversity combiner in conjunction with data indicating the time at which the corresponding signal was received at the respective receiver.

9. A system for performing diversity transmission, comprising:
two transmitter units, each transmitter unit comprising an antenna and transmit processing circuitry;
a diversity splitter for receiving traffic data, the diversity splitter being communicatively linked to each transmitter unit, the link between the diversity splitter and at least one of the receiver units being over a data network, and being configured to perform diversity splitting of the traffic data to form two series of digital signals, each series of digital signals representing a signal transmissible over one of multiple antennas such that transmission of the signals represented by both the series of digital signals can collectively represent the traffic data and to transmit one series of digital signals over the link to each transmitter unit;
the transmit processing circuitry of each transmitter unit being configured to process digital signals received at that transmitter unit to cause signals dependent on those digital signals to be transmitted by means of the respective antenna.

10. A system as claimed in claim 9, wherein the diversity splitting is performed in dependence on channel estimates in respect of two or more physical channels between the antennas and one or more receivers.

11. A system as claimed in claim 9 or 10, wherein the diversity splitting comprises performing spatial multiplexing on the traffic data.

12. A system as claimed in any of claims 9 to 11, wherein the diversity splitting comprises forming the series of digital signals to represent un-correlated transmissible signals.

13. A system as claimed in any of claims 9 to 12, wherein the transmitter units each comprise an upconverter for upconverting signals represented by the digital signals for transmission to a radio frequency.

14. A system as claimed in any of claims 9 to 13, wherein the diversity splitter comprises an inverse FFT unit for performing inverse FFT on data to be transmitted and the digital signals are derived from the outputs of the inverse FFT unit.

15. A system as claimed in any of claims 9 to 14, wherein the data network is a packet data network.

16. A system as claimed in any preceding claim, wherein at least some of the samples are transmitted to the transmitters in conjunction with data indicating the time at which the corresponding signals are to be transmitted.
